# EUROPÄISCHE PATENTSCHRIFT

(11) **EP 1 621 746 B1**
(45) Veröffentlichungstag und Bekanntmachung des Hinweises auf die Patenterteilung: **16.06.2010**
(21) Anmeldenummer: 05015502.7
(22) Anmeldetag: 16.07.2005
(51) Int. Cl.: F02D 41/00

(54) **Verfahren zur Ermittlung einer mittleren Amplitude von Luftmassenschwingungen**
Method to determine an average amplitude of air mass flow fluctuations
Méthode pour déterminer une amplitude moyenne des flutuactions du débit massique d'air

(30) Priorität: 28.07.2004 DE 102004036553
(43) Veröffentlichungstag der Anmeldung: 01.02.2006
(73) Patentinhaber: Bayerische Motoren Werke Aktiengesellschaft, 80809 München (DE)
(72) Erfinder: Schenkermayr, Günter, 3352 Ertl (AT)

(56) Entgegenhaltungen:
- EP-A- 0 575 635
- EP-A- 1 323 927
- DE-A1- 10 241 892

## Beschreibung

Die Erfindung bezieht sich auf ein Verfahren zur Ermittlung einer mittleren Amplitude von Luftmassenschwingungen eines Luftmassensignals im Ansaugweg einer Aufladeeinrichtung zur Steuerung eines Soll-Ladedrucks der Aufladeeinrichtung für einen Verbrennungsmotor, insbesondere eines Abgasturboladers für einen Dieselmotor eines Kraftfahrzeugs.

Ladedrucksteuerungen sind seit langem bekannt. Durch ein Überschreiten eines kritischen Druckverhältnisses zwischen dem Druck vor der Aufladeeinheit und dem Druck nach der Aufladeeinheit kann es innerhalb der Aufladeeinheit zu einem pumpenden Rückströmen der verdichteten Luft auf der Ansaugseite der Aufladeeinheit bzw. des Verdichters kommen. Dieser Effekt ist der sog. Pump-Effekt oder Surging-Effekt. Durch das pumpende Rückströmen der Luft werden Druckschwingungen in der Ansaugluft verursacht, die zu erhöhten Geräuschemissionen und Bauteilebelastungen der Aufladeeinrichtung und der Luftführungsteile führen.

Aus der DE 24 41 804 A1 ist eine Vorrichtung bekannt, wodurch das Pumpen der Aufladeeinrichtung vermieden werden soll. Jeweils vor und nach der Aufladeeinrichtung bzw. des Verdichters ist ein Druckgeber, und vor dem Verdichter ist zusätzlich noch ein Mengenmesser angeordnet. Die Messwerte werden einer Auswertungseinheit zugeführt und nach entsprechender Verarbeitung mit einem eingespeicherten Wert einer Pumpgrenzlinie verglichen. Bei Überschreiten der Pumpgrenzlinie wird ein Abblasventil derart angesteuert, dass die Druckdifferenz bzw. der Druck reduziert wird.

Aus der DE 100 62 350 A1 ist bekannt, dass Schwingungen des Luftmassenstroms im Hinblick auf den Pump-Effekt erfasst und ausgewertet werden. Wird der Pump-Effekt erkannt, wird der Soll-Ladedruck der Aufladeinrichtung herabgesetzt. Bei diesem Verfahren wird lediglich zwischen pumpen und nicht pumpen unterschieden; das Ausmaß des Pumpens bleibt unberücksichtigt.

Aus der noch unveröffentlichten Patentanmeldung DE 10352572 A1 ist dem Erfinder der Anmelderin bereits ein Verfahren zur Ermittlung einer mittleren Amplitude von Luftschwingungen zur Steuerung eines Soll-Ladedrucks einer Aufladeeinrichtung für einen Verbrennungsmotor intern bekannt. Mittels diesem Verfahren ist es allerdings nur bedingt möglich zwischen harmonischen Luftmassenschwingungen, wie sie beim Surging-Effekt auftreten, und monotonen Luftmassenänderungen, wie sie im dynamischen Fahrzeugbetrieb permanent auftreten, zu unterscheiden.

Aufgabe der Erfindung ist, ein Verfahren anzugeben, welches lediglich beim Auftreten von harmonischen Luftmassenschwingungen die mittlere Amplitude der Luftmasse ermittelt.

Diese Aufgabe wird erfindungsgemäß durch ein Verfahren nach Patentanspruch 1 gelöst. Vorteilhafte Weiterbildungen sind die Gegenstände der abhängigen Ansprüche.

Das erfindungsgemäße Verfahren zur Ermittlung einer mittleren Amplitude von Luftmassenschwingungen eines Luftmassensignals im Ansaugweg einer Aufladeeinrichtung zur Steuerung eines Soll-Ladedrucks der Aufladeeinrichtung für einen Verbrennungsmotor, insbesondere eines Abgasturboladers für einen Dieselmotor eines Kraftfahrzeugs, ist durch folgende Schritte gekennzeichnet:
a) Erfassen des Luftmassensignals im Ansaugweg der Aufladeeinrichtung,
b) Ermitteln eines Gradienten des Luftmassensignals,
c) Gleichrichten des Gradienten und bilden eines ersten Mittelwerts aus dem gleichgerichteten Gradienten in einem ersten Pfad,
d) Bilden eines zweiten Mittelwerts aus dem Gradienten und gleichrichten des zweiten Mittelwerts in einem zweiten Pfad und
e) Bilden eines Differenzsignals als Maß für die mittlere Amplitude der Luftmassenschwingungen aus dem ersten Mittelwert und dem gleichgerichteten zweiten Mittelwert.

Die Luftmassenschwingungen werden durch einen bereits im Fahrzeug vorhandenen Lustmassenmesser detektiert. Durch die erfindungsgemäße Auswertung der Luftmassenschwingungen wird ein Maß für die mittlere Amplitude der Luftmassenschwingungen erzeugt, das wiederum ein Maß für das Pumpen im Ansaugweg der Aufladeeinrichtung darstellt. Das erfindungsgemäße Verfahren bietet den Vorteil, dass bei einem harmonisch schwingenden Luftmassensignal, das vor allem beim Surging-Effekt auftritt, der aus dem Gradienten des Luftmassensignals gebildete zweite Mittelwert annähernd Werte um Null liefert, wobei bei der ersten Mittelwertbildung des gleichgerichteten Gradienten sehr hohe Werte erzeugt werden. Im Gegensatz dazu sind der aus dem Gradienten des Luftmassensignals gebildete und gleichgerichtete zweite Mittelwert und der ersten Mittelwert des gleichgerichteten Gradienten bei monotonen Luftmassenänderungen in etwa identisch. Somit wird lediglich bei Schwingungen der Luftmasse die mittlere Amplitude ermittelt, bei monotonen Luftmassenänderungen beträgt der Wert durch die Differenzbildung der beiden Pfade in etwa Null. Das Verfahren wird vorzugsweise in einem bereits vorhandenen elektronischen Steuergerät durchgeführt.

Vorteilhafterweise kann aus dem Differenzsignal noch ein dritter Mittelwert als Maß für die mittlere Amplitude gebildet werden. Durch die dritte Mittelwertbildung wird das Differenzsignal weiter geglättet.

Vorteilhafterweise wird abhängig von der Differenz aus der mittleren Amplitude der Luftmassenschwingungen und einer vorgegebenen mittleren Soll-Amplitude der Luftmassenschwingungen ein Korrekturfaktor zur Korrektur eines Soll-Ladedrucks der Aufladeeinrichtung ermittelt. Das Verfahren dient somit der Vermeidung von Pump-Effekten bzw. Surging Effekten bei Aufladeeinrichtungen und führt damit zu einer wesentlichen Verbesserung der Geräusch-Emissionen und der Bauteile-Lebensdauer der Aufladeeinrichtung und der Luftführungsteile.

Vorteilhafterweise kann der Gradient mittels einer DT1- Filtereinheit gebildet werden und der erste Mittelwert und/oder der zweite Mittelwert und/oder -falls vorhanden- der dritte Mittelwert mittels eines PT1-Filters ermittelt werden.
Die DT1-Filtereinheit kann derart ausgestaltet sein, dass es sich hierbei um einen gemeinsamen Filter vor der Trennung der Pfade oder um zwei separate DT1-Filter in den jeweiligen Pfaden mit unabhängig voneinander einstellbaren Zeitkonstanten und Verstärkungsfaktoren handelt, wodurch eine bessere Anpassung an das System möglich ist. Als PT1- Filter zur Mittelwertbildung eignen sich Tiefpässe mit großen Zeitkonstanten. Die Tiefpässe beziehungsweise die Zeitkonstanten der Tiefpässe können verschieden voneinander sein. Durch das Filtern mittels der Tiefpässe werden aus den Eingangssignalen, also aus dem Gradienten bzw. aus dem gleichgerichteten Gradienten bzw. aus dem Differenzsignal die Mittelwerte der Eingangsignale gebildet.

Vorteilhafterweise kann die Soll-Amplitude der Luftmassenschwingungen von der Drehzahl des Verbrennungsmotors und/oder der Kraftstoffeinspritzmenge und/oder dem atmosphärischen Luftdruck und/oder der Ansauglufttemperatur abhängig sein. Die vorgegebene Soll-Amplitude der Luftmassenschwingungen wird aus einem Kennfeld bzw. einer Kennlinie, in dem abhängig von der Drehzahl und des Verbrennungsmotors möglicherweise anderen Parametern (Kraftstoffeinspritzmenge, atmosphärischer Luftdruck, Ansauglufttemperatur) unterschiedliche Soll-Amplituden der Luftmassenschwingungen abgelegt sind, ermittelt.

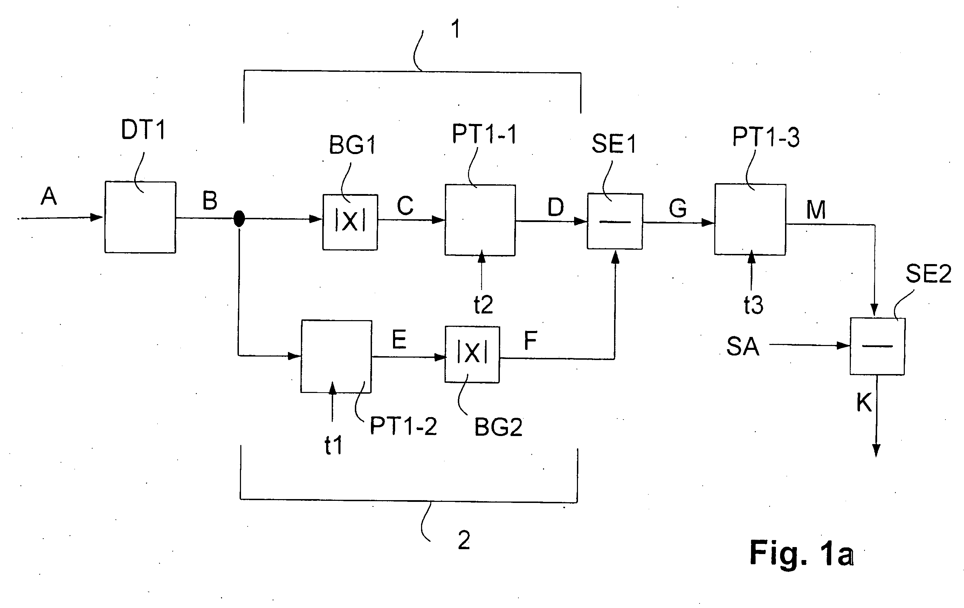

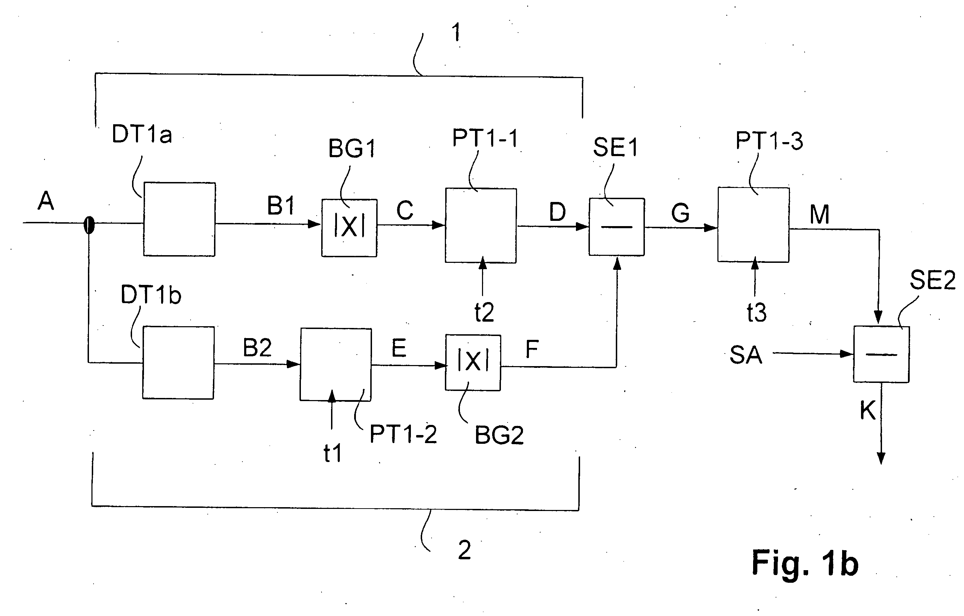

In der Zeichnung ist ein Ausführungsbeispiel der Erfindung dargestellt. Es zeigt
- Fig. 1 a: ein Blockschaltbild des erfindungsgemäßen Verfahrens,
- Fig. 1 b: ein alternatives Blockschaltbild des erfindungsgemäßen Verfahrens,
- Fig. 2a - 2d: die an den verschiedenen Stellen des Verfahrens aus Fig. 1 a zugehörigen Signale bei harmonischen Luftmassenschwingungen und
- Fig. 3a - 3d: die an den verschiedenen Stellen des Verfahrens aus Fig. 1 a zugehörigen Signale bei monotonen Luftmassenänderungen.

In Fig. 1a ist das erfindungsgemäße Verfahren zur Ermittlung einer mittleren Amplitude M von Luftmassenschwingungen eines Luftmassensignals A im Ansaugweg einer Aufladeeinrichtung zur Steuerung eines Soll-Ladedrucks der Aufladeeinrichtung für einen Verbrennungsmotor, insbesondere eines Abgasturboladers für einen Dieselmotor eines Kraftfahrzeugs, dargestellt.

Das Eingangssignal ist ein mittels eines Luftmassensensors ermitteltes Luftmassensignal A. Aus dem Luftmassensignal.A wird gemäß dem Verfahren nach Patentanspruch 1 der Gradient B des Luftmassensignals ermittelt. Die Gradientenermittlung kann vorteilhafterweise mittels einer DT1-Filtereinheit, die hier aus einem einzigen DT1-Filter besteht, vorgenommen werden. Der Gradient B wird in einem ersten Pfad 1 zuerst gleichgerichtet, wodurch sich ein gleichgerichtetes Gradientensignal C ergibt, und anschließend wird aus dem gleichgerichteten Gradientensignal C ein erster Mittelwert D gebildet. Das Gradientensignal B kann bspw. mittels einer Brücken-Gleichrichterschaltung BG1 gleichgerichtet werden. Der erste Mittelwert D kann vorteilhafterweise mittels eines PT1-Filters PT1-1 gebildet werden, wobei die Zeitkonstante t1 so gewählt werden sollte, dass ein optimaler Kompromiss zwischen Signalglättung und Signaldynamik erreicht wird.

Parallel zum ersten Pfad 1 wird in einem zweiten Pfad 2 aus dem Gradienten B in einem ersten Schritt ein zweiter Mittelwert E gebildet und anschließend der zweite Mittelwert E gleichgerichtet, so dass sich ein gleichgerichteter zweiter Mittelwert F ergibt. Der zweite Mittelwert E kann vorteilhafterweise wiederum mittels eines PT1-Filters PT1-2 gebildet werden, wobei die Zeitkonstante t2 so gewählt werden sollte, dass ein optimaler Kompromiss zwischen Signalglättung und Signaldynamik erreicht wird. Die beiden Filter PT1-1 und PT1-2 können unterschiedlich ausgestaltet sein. Der zweite Mittelwert E kann, entsprechend dem ersten Pfad 1, ebenfalls mittels einer Brücken-Gleichrichterschaltung BG2 gleichgerichtet werden.

Von dem ersten Mittelwertsignal D wird das gleichgerichtete zweite Mittelwertsignal F gemäß Fig. 1 a mittels einer Einheit SE1 subtrahiert, wodurch sich ein Differenzsignal G ergibt. Dieses Differenzsignal G kann entweder direkt als Maß für die mittlere Amplitude der Luftmassenschwingung verwendet werden, oder es kann vorteilhafterweise aus dem Differenzsignal G ein dritter Mittelwert M als Maß für die mittlere Amplitude der Luftmassenschwingungen gebildet werden.. Die dritte Mittelwertbildung M kann mittels eines PT1-Filter PT1-3 zur weiteren Glättung für eine optimale Weiterverarbeitung des Signals herangezogen werden.

Von dem dritten Mittelwert M als Maß für die mittlere Amplitude der Luftmassenschwingung wird eine vorgegebene Soll-Amplitude SA der Luftmassenschwingungen mittels einer Einheit SE2 subtrahiert, wodurch ein Korrekturfaktor K zur Korrektur eines Soll-Ladedrucks der Aufladeeinrichtung (hier nicht dargestellt) ermittelt wird. Ist die Differenz zwischen der mittleren Amplitude E der Luftmassenschwingungen und der vorgegebenen Soll-Amplitude SA der Luftmassenschwingungen null, ist kein Korrekturwert bzw. keine Änderung des Korrekturwertes notwendig, da das Pumpen bereits kompensiert ist.

In Fig. 1b ist ein alternatives Blockschaltbild zu Fig. 1a zur Ermittlung einer mittleren Amplitude M von Luftmassenschwingungen eines Luftmassensignals A im Ansaugweg einer Aufladeeinrichtung dargestellt.

Im Unterschied zur Fig.1a wird in der Fig. 1b anstelle eines einzigen DT1-Filters als DT1-Filtereinheit vor der Trennung der beiden Pfade 1 und 2, jeweils ein separater Filter DT1 a und DT1 b als DT1-Filtereinheit zur Ermittlung des Gradienten B1 bzw. B2 aus dem Luftmassensignal verwendet. Dadurch können unterschiedliche Zeitkonstanten und Verstärkungsfaktoren für die beiden DT1-Filter DT1 a und DT1 b verwendet werden, wodurch eine bessere Anpassung an das System möglich ist.

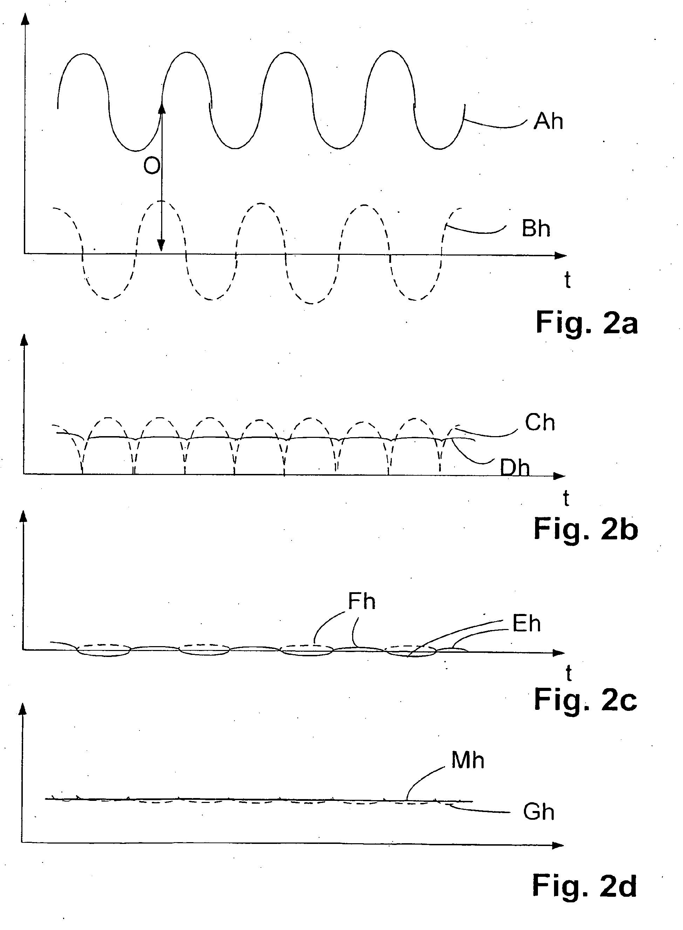

In den Fig. 2a bis 2d sind die Signale Ah bis Mh eines harmonisch schwingenden Luftmassensignals Ah aufgetragen, welche vor allem beim ungewollten Pump-Effekt auftritt. Der Einfachheit halber ist das harmonisch schwingende Luftmassensignal Ah als Sinusschwingung mit einem Offset O dargestellt. Der in der Fig. 2b dargestellte Signalverlauf Bh entspricht dem aus dem Luftmassensignal Ah gebildeten Gradienten Bh. Der Gradient Bh ist eine Kosinusschwingung ohne Offset O. Der Signalverlauf Ch entspricht dem gleichgerichteten Gradienten Bh gemäß dem erfindungsgemäßen Verfahren. Hierbei werden die negativen Anteile des Gradienten Bh in den positiven Bereich geklappt. Aus dem gleichgerichteten Gradientensignal Ch wird anschließend der erste Mittelwert Dh gebildet, welches ebenfalls in der Fig. 2b dargestellt ist.

Gemäß dem in Fig. 1 a dargestellten Verfahren wird in einem zweiten Pfad aus dem bereits ermittelten Gradentensignal Bh der zweite Mittelwert Eh gebildet, der in der Fig. 2c (durchgezogene Linie) dargestellt ist. Dieser zweite Mittelwert Eh wird ebenfalls gleichgerichtet, wodurch sich der in der Fig. 2c dargestellte gleichgerichtete Mittelwert Fh ergibt (Kombination aus gestrichelten und durchgezogenen Linien im positiven Bereich). Da der Signalverlauf Dh Werte im "hohen" positiven Bereich aufweist und der Signalverlauf Fh annähernd Werte um Null liefert, ergibt sich bei der Differenzbildung der beiden Signalverläufe Dh und Fh ein Signalverlauf Gh, der weit im positiven Bereich liegt. Aus dem Signalverlauf Gh wird vorteilhafterweise nochmals ein dritter Mittelwert gebildet, wodurch sich der Signalverlauf Mh als Maß für die mittlere Amplitude der Luftmassenschwingung ergibt, der im positiven Bereich liegt.

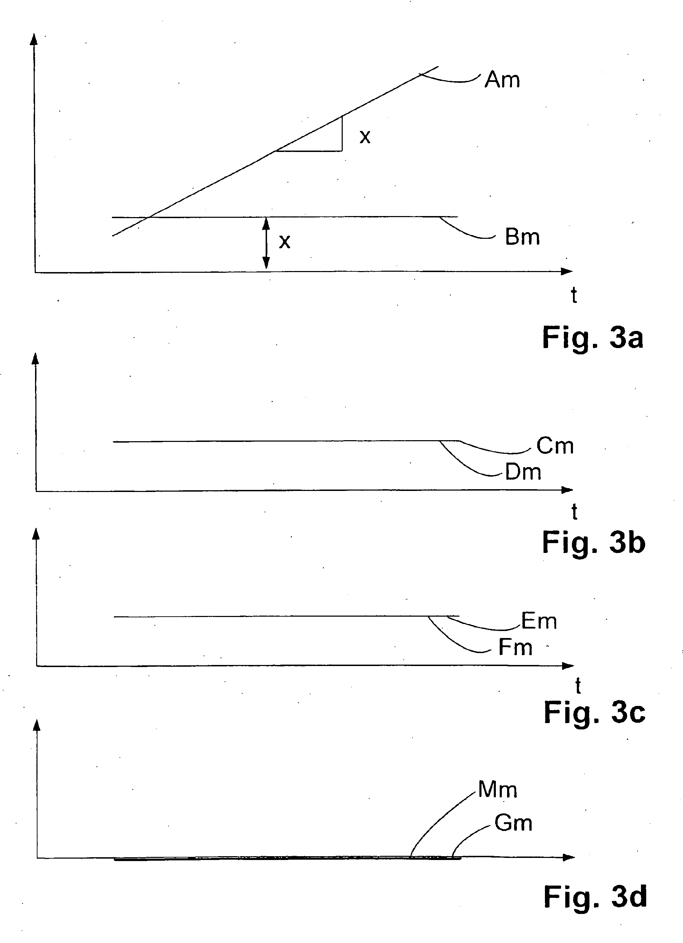

Im Gegensatz zu den Signalverläufen Ah - Mh in den Fig. 2a bis 2d sind in den Fig. 3a bis 3d die gemäß dem erfindungsgemäßen Verfahren erzeugten Signalverläufe Am - Mm eines sich monoton ändernden Luftmassensignals Am aufgetragen. Derartige monotone Luftmassenänderungen Am kommen permanent im dynamischen Fahrzeugbetrieb bei Beschleunigungs- oder Abbremsvorgängen vor. Das sich monoton ändernde Luftmassensignal Am ist der Einfachheit halber als Gerade mit einer Steigung x dargestellt. Der Signalverlauf Bm entspricht dem aus dem Luftmassensignal Am gebildeten Gradienten Bm. Der Gradient Bm ist eine zur t-Achse parallele Gerade mit einem Offsetwert x, der sich aus der Steigung des Luftmassensignals Am ergibt. Der in der Fig. 3b aufgetragene Signalverlauf Cm entspricht dem gleichgerichteten Gradienten Bm gemäß dem erfindungsgemäßen Verfahren. Da es sich bei dem Gradienten Bm um eine Gerade im positiven Bereich handelt, entspricht der Signalverlauf Cm dem Signalverlauf Bm. Aus dem gleichgerichteten Gradientensignal Cm wird anschließend der erste Mittelwert Dm gebildet, welcher identisch mit dem Signalverlauf Cm ist, da Cm eine parallele Gerade zur t-Achse ist.

Gemäß dem in Fig. 1 a dargestellten Verfahren wird in einem zweiten Pfad aus dem bereits ermittelten Gradentensignal Bm der zweite Mittelwert Em gebildet, der in der Fig. 2c dargestellt ist. Dieser zweite Mittelwert Em wird ebenfalls gleichgerichtet, wodurch sich der in der Fig. 2c dargestellte gleichgerichtete Mittelwert Fm ergibt. Hierbei sind die Signalverläufe Em und Fm wieder mit dem Signalverlauf Bm identisch, da der Gradientenverlauf Bm ein eine zur t-Achse parallel verschobene Gerade ist. Somit sind die Signalverläufe Cm und Fm ebenfalls identisch, wodurch das aus den Signalverläufen Cm und Fm gebildete Differenzsignal Gm zu Null wird. Aus dem Signalverlauf Gm wird vorteilhafterweise nochmals ein dritter Mittelwert gebildet, wodurch sich der Signalverlauf Mm ergibt, der ebenfalls über den gesamten Verlauf Null ist. Da das Signal Mm in etwa Null ist, kann festgestellt werden, dass das Luftmassensignal nicht schwingt, also kein Pump-Effekt auftritt.

## Patentansprüche

1. Verfahren zur Ermittlung einer mittleren Amplitude (G; Gh; Gm; M; Mh; Mm) von Luftmassenschwingungen eines Luftmassensignals (A;Ah; Am) im Ansaugweg einer Aufladeeinrichtung zur Steuerung eines Soll-Ladedrucks der Aufladeeinrichtung für einen Verbrennungsmotor, insbesondere eines Abgasturboladers für
einen Dieselmotor eines Kraftfahrzeugs, wobei
**a.** das Luftmassensignal (A; Ah; Am) im Ansaugweg der Aufladeeinrichtung erfasst wird,
**b.** der Gradient (B; ;B1; B2; Bh; Bm) des Luftmassensignals (A; Ah; Am) ermittelt wird,
**c.** in einem ersten Pfad (1) der Gradient (B; B1; Bh; Bm) gleichgerichtet (C; Ch; Cm) wird und aus dem gleichgerichteten Gradienten (C; Ch; Cm) ein erster Mittelwert (D; Dh; Dm) gebildet wird,
**d.** in einem zweiten Pfad (2) aus dem Gradienten (B; B2; Bh; Bm) ein zweiter Mittelwert (E; Eh; Em) gebildet wird und der zweite Mittelwert (E; Eh; Em) gleichgerichtet (F; Fh; Fm) wird und
**e.** aus dem ersten Mittelwert (D; Dh; Dm) und dem gleichgerichteten zweiten Mittelwert (F; Fh; Fm) ein Differenzsignal (G; Gh; Gm) als Maß für die mittlere Amplitude der Luftmassenschwingungen gebildet wird.

2. Verfahren nach Patentanspruch 1, **dadurch gekennzeichnet, dass** aus dem Differenzsignal (G; Gh; Gm) ein dritter Mittelwert (M; Mh; Mm) als Maß für die mittlere Amplitude der Luftmassenschwingungen gebildet wird.

3. Verfahren nach Patentanspruch 1, oder 2, **dadurch gekennzeichnet, dass** abhängig von der Differenz aus der mittleren Amplitude (G; Gh; Gm; M; Mh; Mm) der Luftmassenschwingungen und einer vorgegebenen mittleren Soll-Amplitude (SA) der Luftmassenschwingungen ein Korrekturfaktor (K) zur Korrektur eines Soll-Ladedrucks der Aufladeeinrichtung ermittelt wird.

4. Verfahren nach Patentanspruch 2, **dadurch gekennzeichnet, dass** der dritte Mittelwert (M; Mh; Mm) mittels eines PT1-Filters (PT1-3) ermittelt wird.

5. Verfahren nach einem der vorangegangenen Patentansprüche, **dadurch gekennzeichnet, dass** der erste Mittelwert (D; Dh; Dm) und/oder der zweite Mittelwert (E; Eh; Em) mittels eines PT1-Filters (PT1-1; Pt1-2) ermittelt wird.

6. Verfahren nach einem der vorangegangenen Patentansprüche, **dadurch gekennzeichnet, dass** der Gradient (B; B1; B2; Bh; Bm) mittels eines DT1- Filtereinheit (DT1;DT1a, DT1b) gebildet wird.

7. Verfahren nach Patentanspruch 3, **dadurch gekennzeichnet, dass** die Soll-Amplitude (SA) der Luftmassenschwingungen von der Drehzahl des Verbrennungsmotors und/oder der Kraftstoffeinspritzmenge und/oder dem atmosphärischen Luftdruck und/oder der Ansauglufttemperatur abhängig ist.

## Claims

1. A method for determining an average amplitude (G; Gh; Gm; M; Mh; Mm) of air mass flow fluctuations of an air mass flow signal (A; Ah; Am) in the intake path of a charge device for controlling a desired charge pressure of the charge device for an internal combustion engine, more especially an exhaust gas turbocharger for a diesel engine of a motor vehicle, wherein
a. the air mass flow signal (A; Ah; Am) is detected in the intake path of the charge device,
b. the gradient (B; B1; B2; Bh; Bm) of the air mass flow signal (A; Ah; Am) is determined,
c. the gradient (B; B1; Bh; Bm) is rectified (C; Ch; Cm) in a first path (1) and a first mean value (D; Dh; Dm) is formed from the rectified gradient (C; Ch; Cm),
d. a second mean value (E; Eh; Em) is formed in a second path (2) from the gradient (B; B2; Bh; Bm) and the second mean value (E; Eh; Em) is rectified (F; Fh; Fm) and
e. a difference signal (G; Gh; Gm) is formed from the first mean value (D; Dh; Dm) and the rectified second mean value (F; Fh; Fm) as a measure of the average amplitude of the air mass flow fluctuations.

2. A method according to claim 1, **characterised in that** a third mean value (M; Mh: Mm) is formed from the difference signal (G; Gh; Gm) as a measure of the average amplitude of the air mass flow fluctuations.

3. A method according to claim 1 or 2, **characterised in that** a correction factor (K) to correct a desired charge pressure of the charge device is determined as a function of the difference of the average amplitude (G; Gh; Gm; M; Mh; Mm) of the air mass flow fluctuations and a predetermined average desired amplitude (SA) of the air mass flow fluctuations.

4. A method according to claim 2, **characterised in that** the third mean value (M; Mh; Mm) is determined by means of a PT1-filter (PT1-3).

5. A method according to any one of the preceding claims, **characterised in that** the first mean value (D; Dh; Dm) and/or the second mean value (E; Eh; Em) is determined by means of a PT1-filter (PT1-1; PT1-2).

6. A method according to any one of the preceding claims, **characterised in that** the gradient (B; B1; B2; Bh; Bm) is formed by means of a DT1-filter unit (DT1; DT1a, DT1b).

7. A method according to claim 3, **characterised in that** the desired amplitude (SA) of the air mass flow fluctuations depends on the speed of the internal combustion engine and/or the fuel injection quantity and/or the atmospheric air pressure and/or the intake air temperature.

## Revendications

1. Procédé pour déterminer une amplitude moyenne (G; Gh; Gm; M; Mh; Mm) de fluctuations de masse d'air du signal de masse d'air (A; Ah; Am) dans la ligne d'admission d'une installation d'alimentation pour commander une pression d'alimentation de consigne de l'installation d'alimentation d'un moteur à combustion, notamment d'un turbocompresseur de gaz d'échappement d'un moteur Diesel d'un véhicule automobile, selon lequel
a. on saisit le signal de masse d'air (A; Ah; Am) dans la ligne d'admission de l'installation d'alimentation,
b. on détermine le gradient (B; B1; B2; Bh; Bm) du signal de masse d'air (A; Ah; Am),
c. dans un premier chemin (1), on redresse (C; Ch; Cm) le gradient (B; B1; Bh; Bm) et à partir du gradient redressé (C; Ch; Cm), on forme une valeur moyenne (D; Dh; Dm),
d. dans un second chemin (2), à partir du gradient (B; B2; Bh; Bm), on forme une valeur moyenne (E; Eh; Em) et on redresse (F; Fh; Fm) la seconde valeur moyenne (E; Eh; Em), et
e. à partir de la première valeur moyenne (D; Dh; Dm) et de la seconde valeur moyenne (F; Fh; Fm) redressée, on forme un signal de différence (G; Gh; Gm) comme mesure de l'amplitude moyenne des fluctuations de la masse d'air.

2. Procédé selon la revendication 1,
**caractérisé en ce qu'**
à partir du signal de différence (G; Gh; Gm), on forme une troisième valeur moyenne (M; Mh; Mm) comme mesure de l'amplitude moyenne des fluctuations de la masse d'air.

3. Procédé selon la revendication 1 ou 2,
**caractérisé en ce qu'**
en fonction de la différence entre l'amplitude moyenne (G; Gh; Gm; M; Mh; Mm) des fluctuations de la masse d'air et d'une amplitude de consigne, moyenne prédéfinie (SA) des fluctuations de masse d'air, on détermine un coefficient de correction (K) pour corriger la pression d'alimentation de consigne de l'installation d'alimentation.

4. Procédé selon la revendication 2,
**caractérisé en ce qu'**
on forme la troisième valeur moyenne (M; Mh; Mm) à l'aide d'un filtre PT1 (PT1-3).

5. Procédé selon l'une des revendications précédentes,
**caractérisé en ce qu'**
on détermine la première valeur moyenne (D; Dh; Dm) et/ou la seconde valeur moyenne (E; Eh; Em) à l'aide d'un filtre PT1 (PT1-1; Pt1-2).

6. Procédé selon l'une des revendications précédentes,
**caractérisé en ce qu'**
on forme le gradient (B; B1; B2; Bh; Bm) à l'aide d'une unité de filtre DT1 (DT1; DT1a; DT1b).

7. Procédé selon la revendication 3,
**caractérisé en ce que**
l'amplitude de consigne (SA) des fluctuations de la masse d'air dépend de la vitesse de rotation du moteur à combustion interne et/ou de la quantité de carburant injectée et/ou de la pression d'air atmosphérique et/ou de la température de l'air aspiré.
